# EUROPÄISCHE PATENTSCHRIFT

(11) **EP 2 494 847 B1**
(45) Veröffentlichungstag und Bekanntmachung des Hinweises auf die Patenterteilung: **20.11.2013**
(21) Anmeldenummer: 10751810.2
(22) Anmeldetag: 31.08.2010
(51) Int. Cl.: H05B 6/76

(54) **VERSCHLUSSELEMENT FÜR EINEN MIKROWELLENOFEN**
CLOSURE ELEMENT FOR A MICROWAVE OVEN
ÉLÉMENT DE FERMETURE POUR UN FOUR À MICRO-ONDES

(30) Priorität: 09.09.2009 DE 102009040669
(43) Veröffentlichungstag der Anmeldung: 05.09.2012
(73) Patentinhaber: Alessi, Mario, 76227 Karlsruhe (DE)
(72) Erfinder: Alessi, Mario, 76227 Karlsruhe (DE)
(74) Vertreter: Geitz, Holger
(86) Internationale Anmeldenummer: PCT/EP2010/005325
(87) Internationale Veröffentlichungsnummer: WO 2011/029541

(56) Entgegenhaltungen:
- WO-A1-2007/071197
- DE-A1- 2 048 479
- DE-A1- 2 059 156
- GB-A- 2 284 805

## Beschreibung

Die Erfindung betrifft einen Mikrowellenofen mit einem Erwärmungsraum mit einer Beschickungsöffnung und einem Verschlusselement mit einem die Beschickungsöffnung an ihrem Umfang überragenden, an seinem Umfang mit einer Vielzahl von Laschen versehenen Laschenelement.

Ein derartiger Mikrowellenofen ist bereits aus der US 2009/0294441 A1 bekannt. Der Gegenstand dieser Offenlegungsschrift sieht einen runden Mikrowellenofen vor, dessen Beschickungsöffnung mit einer zweiflügeligen Schiebetür verschlossen werden kann.

Ein weiterer Mikrowellenofen mit einem Laschenelement im Bereich der Beschickungsöffnung ist aus der DE 2 048 479 A1 vorbekannt.

Mikrowellenöfen sind allgemein bekannt. Sie weisen einen Erwärmungsraum auf, in den mittels eines Magnetrons erzeugte Mikrowellen geleitet werden, um dort insbesondere Speisen zu erwärmen. Diese Speisen werden durch eine Beschickungsöffnung in den Erwärmungsraum eingebracht. Nach der Erwärmung der Speisen werden diese üblicherweise auch durch die Beschickungsöffnung wieder aus dem Mikrowellenofen entnommen.

Es ist dabei eine wesentliche Aufgabe bei der Konstruktion von entsprechenden Verschlusselementen für die Beschickungsöffnung diese mikrowellendicht zu verschließen, so dass ein unerwünschtes Austreten von Mikrowellen aus dem Erwärmungsraum verhindert wird.

Im Haushaltsbereich werden diesbezüglich insbesondere enge Spalte zwischen den als Türen oder Klappen ausgebildeten Verschlüssen und den Beschickungsöffnungen vorgesehen. Teilweise werden derart enge Spalten noch durch mikrowellendichte Gummidichtungen oder magnetisch wirkende Abdichtungen unterstützt.

Im professionellen Bereich werden derartige Elemente nicht genutzt, da hier ein zu hoher Verschleiß zu befürchten ist.

Statt dessen werden metallische Plattenelemente, die die Beschickungsöffnung an deren Rand überragen, gegen die den Rand der Beschickungsöffnung umgebenden Flächen gedrückt.

Jetzt hat sich aber herausgestellt, dass diese Plattenelemente dazu neigen, sich zu verziehen, so dass mit ihnen kein mikrowellendichter Verschluss der Beschickungsöffnung gewährleistet ist.

Aufgabe der vorliegenden Erfindung ist es daher, ein Verschlusselement wie oben angegeben derart weiterzubilden, dass mit ihm auch im harten professionellen Gebrauch ein mikrowellendichter Verschluss der Beschickungsöffnung gewährleistet ist.

Diese Aufgabe wird erfindungsgemäß dadurch gelöst, dass das Plattenelement, das vor der Beschickungsöffnung des Verschlusselementes vorgesehen ist, an seinem Umfang mit einer Vielzahl von Federlaschen versehen ist.

Die Vielzahl der Federlaschen gewährleistet, dass diese Federlaschen jeweils für sich an der die Beschickungsöffnung umgebenden Fläche anliegen. Innerhalb des Plattenelements gegebenenfalls auftretende Verspannungen können dabei durch die einzelnen Federlaschen separat ausgeglichen werden, so dass jede Federlasche einzeln dichtend anliegt, so dass über den gesamten Umfang des Plattenelementes eine gewünschte Mikrowellendichtheit erreicht wird.

Unter fertigungstechnischen Aspekten ist es günstig, wenn die Federlaschen einstückig mit dem Plattenelement hergestellt sind.

Es ist zwar auch möglich, die Federlaschen separat an dem Plattenelement zu befestigen. Hierfür ist aber ein erhöhter Fertigungsaufwand notwendig.

Insbesondere sind die Federlaschen durch Schlitze voneinander getrennt. Diese Schlitze sind derart eng, dass Mikrowellen in ihnen "gefangen" werden. Die Schlitze gewährleisten es auch, dass jede Federlasche sich unabhängig von der benachbarten Federlasche bewegen und damit dichtend anlegen kann.

Insbesondere wird vorgeschlagen, dass die Federlaschen in Richtung der Beschickungsöffnung aus der durch das Plattenelement bestimmten Ebene hervorstehen.

Hierdurch können beim Andrücken des Plattenelementes gewisse Vorspannungen erzeugt werden, die für jedes einzelne Federelement dessen mikrowellendichtes Anliegen gewährleisten.

Bei einer besonders bevorzugten Ausführungsform ist das Plattenelement mittels einer elastischen Lagerung an einem Türelement befestigt.

Dies hat den Vorteil, dass das Plattenelement bzw. auch die einzelnen Federlaschen an diesem leichte Passungenauigkeiten ausgleichen kann, was einen mikrowellendichten Verschluss insgesamt zuträglich ist.

Bei einem besonders bevorzugten Ausführungsbeispiel ist das Plattenelement in einer bogenabschnittartigen Halterung montiert und die Beschickungsöffnung des Erwärmungsraumes und das Verschlusselement sind gegeneinander verschwenkbar.

Auf diese Weise kann eine raumsparende Bauform realisiert werden, da ein bei üblichen Klapp- oder Schwenktüren notwendiger Bauraum eingespart werden kann.

Bei einer derartigen Konstruktion ist es dann auch im Rahmen der Erfindung, wenn in dem Verschlusselement eine Durchtrittsöffnung für Mikrowellen vorgesehen ist, durch die hindurch vom Magnetron erzeugte Mikrowellen in den Erwärmungsraum hineintreten.

Weitere Vorteile und Merkmale der Erfindung ergeben sich aus der nachfolgenden Beschreibung von Ausführungsbeispielen. Dabei zeigt
- Figur 1: einen Mikrowellenofen mit einem Verschlusselement an einer Schwenktür;
- Figur 2: einen Mikrowellenofen mit einem Verschlusselement an einer Klapptür;
- Figur 3: einen Mirkowellenofen mit einem Verschlusselement an einer bogenabschnittartigen Halterung;
- Figur 4: einen Mikrowellenofen mit einem Verschlusselement an einer bogenabschnittartigen Halterung und einem verschwenkbaren Erwärmungsraum;
- Figur 5: einen Mikrowellenofen gemäß Figur 4 mit einem seitlich verschwenkten Erwärmungsraum;
- Figur 6: einen Mikrowellenofen gemäß Figur 4 mit einem nach unten verschwenkten Erwärmungsraum.

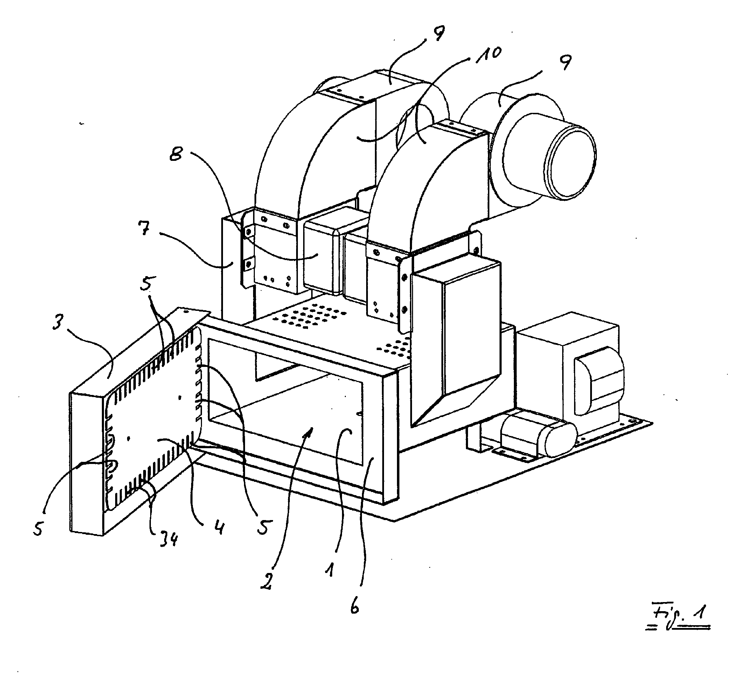

In Figur 1 erkennt man einen Mikrowellenofen mit einem Erwärmungsraum 1. In diesen werden durch eine Beschickungsöffnung 2 zu erwärmende Speisen eingebracht und der Erwärmungsraum 1 wird dann geschlossen, indem eine Schwenktür 3 vor die Beschickungsöffnung 2 geschwenkt wird. Dabei kommt ein Plattenelement 4, das an der Schwenktür 3 befestigt ist, vor der Beschickungsöffnung 2 zu liegen.

Dieses Plattenelement 4 weist an seinem Umfang eine Vielzahl von Federlaschen 5 auf, die dabei an eine Fläche 6 gedrückt werden, die am Umfang der Beschickungsöffnung 2 um diese umläuft. Die Federlaschen 5 sind einstückig am Plattenelement 4 ausgebildet und weisen zwischen sich jeweils Schlitze 34 auf.

Nachdem der Erwärmungsraum 1 auf die beschriebene Weise verschlossen ist, werden durch Mikrowellenleitkanäle 7 von Magnetrons 8 erzeugte Mikrowellen in den Erwärmungsraum 1 eingeführt. Die Magnetrons werden durch Lüfter 9 über Lüftungskanäle 10 gekühlt.

Nach der Erwärmung der zu erwärmenden Speise wird die Schwenktür 3 wieder geöffnet und die Speise wird aus dem Mikrowellenofen entnommen.

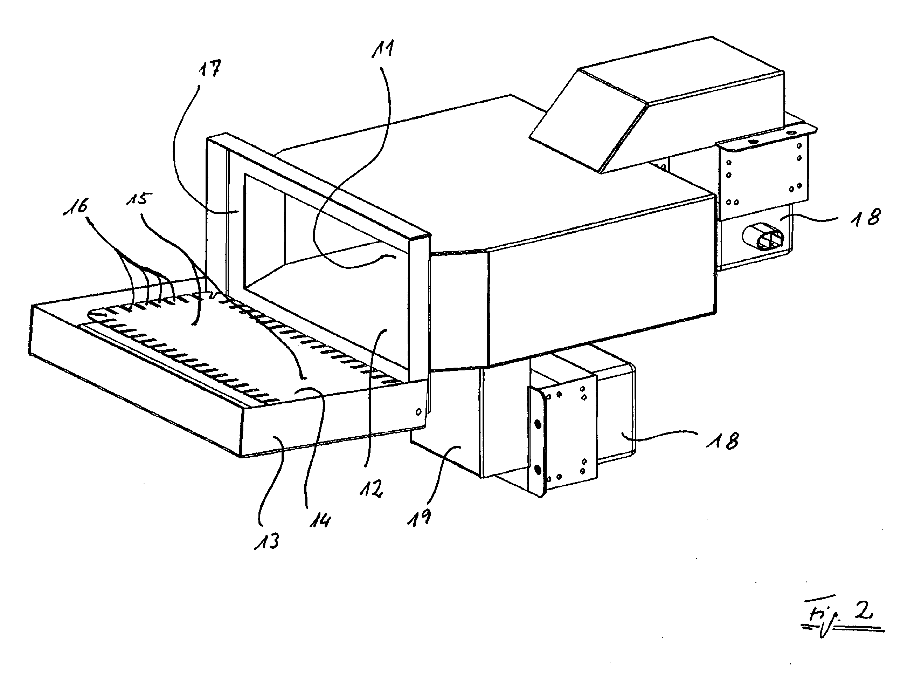

In der Figur 2 ist ein andersartiger Mikrowellenofen dargestellt. Auch hier gibt es einen Erwärmungsraum 11, der eine seitliche Beschickungsöffnung 12 hat. Vor diese Beschickungsöffnung 12 kann eine Klappe 13 als Verschlusselement vorgeklappt werden, wobei diese Klappe ein Plattenelement 14 trägt. Dieses ist über zwei Lagerzapfen 15, die zu einer elastischen Lagerung gehören, elastisch an der Klappe 13 befestigt. Auch das in der Figur 2 dargestellte Plattenelement 14 weist an seinem Umfang eine Vielzahl von Federlaschen 16 auf, die einstückig durch Schlitze voneinander getrennt an ihm ausgebildet sind.

Diese Federlaschen 16 kommen, wenn die Klappe 13 die Beschickungsöffnung 12 verschließt, jeweils einzeln an die Fläche 17 in Anlage, die um die Beschickungsöffnung 12 des Erwärmungsraumes 11 umläuft. Nachdem der Erwärmungsraum 11 auf die beschriebene Art und Weise verschlossen ist, werden die vorher in den Erwärmungsraum eingebrachten Speisen durch Mikrowellen erwärmt, die von Magnetrons 18 erzeugt und über Mikrowellenleitkanäle 19 in das Innere des Erwärmungsraumes 11 geleitet werden. Durch die an der Fläche 17 anliegenden Federlaschen 16 wird dabei ein Austreten von Mikrowellenstrahlen aus dem Erwärmungsraum 11 verhindert.

Damit die Federlaschen dicht an der Fläche 17 anliegen, sind sie in Richtung auf die Fläche 17 aus der durch das Plattenelement 14 bestimmten Ebene herausgebogen.

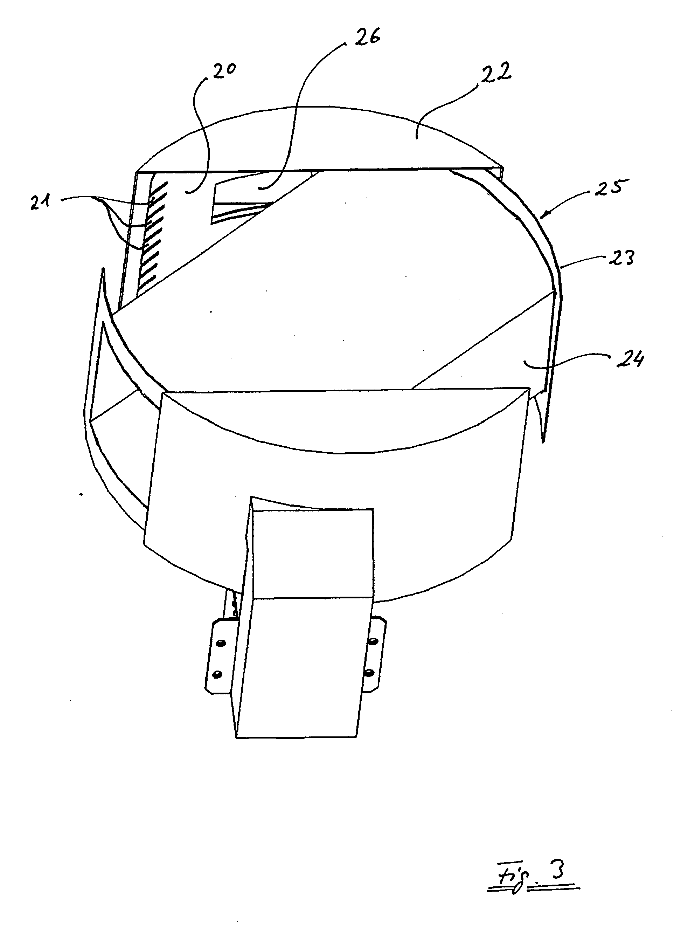

In der Figur 3 ist eine weitere Ausführungsform der Erfindung dargestellt. Man erkennt, dass ein Plattenelement 20, das an seinem Umfang eine Vielzahl von einstückig angeformten, durch Schlitze getrennte Federlaschen 21 aufweist, in einer bogenabschnittartigen Halterung 22 montiert ist. Im hier dargestellten Beispiel ist auch die Beschickungsöffnung 23 des Erwärmungsraumes 24 entsprechend bogenabschnittartig ausgeformt und wird durch ein Verschwenken des Erwärmungsraumes 24 gegenüber dem Plattenelement 20 verschwenkt. Bei diesem Verschwenken kommen die Federlaschen 21 des Plattenelementes 20 in Anlage an die Fläche 25, die die Beschickungsöffnung 23 umgibt. So wird durch die Federlaschen 21 das Austreten von Mikrowellen zwischen der Fläche 25 und der Innenseite der Halterung 22 vermieden.

Es sei hier noch erwähnt, dass in dem hier dargestellten Beispiel das Plattenelement 20 in seinem mittleren Bereich eine Durchtrittsöffnung 26 aufweist, durch die von einem hier nicht zu erkennenden Magnetron erzeugte Mirkowellen in das Innere des vor die Platte 20 geschwenkten Erwärmungsraumes 24 geleitet werden.

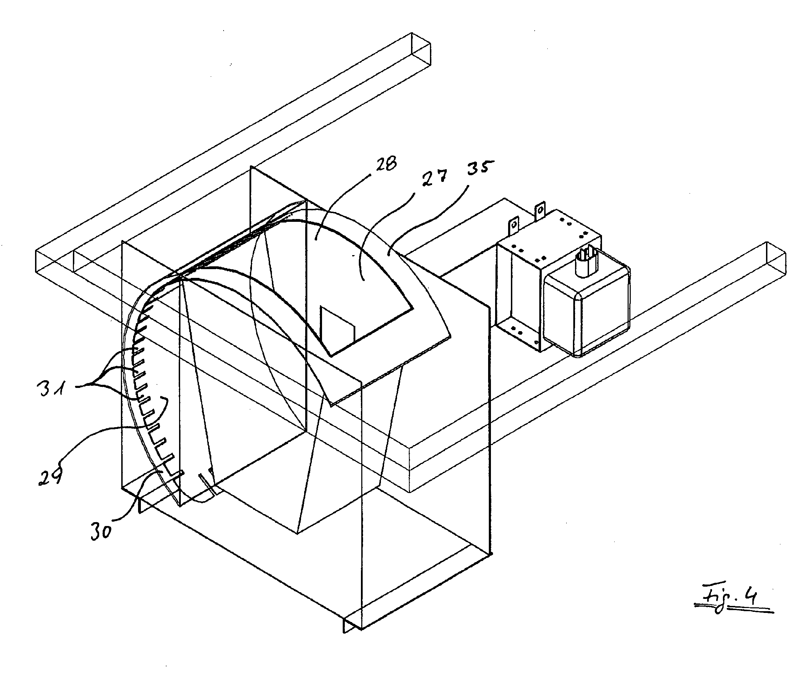

In der Figur 4 wird ein weiteres Ausführungsbeispiel dargestellt für einen Mikrowellenofen mit einem erfindungsgemäßen Verschlusselement. Man erkennt einen verschwenkbaren Erwärmungsraum 27 mit einer hier oben liegenden Beschickungsöffnung 28. Diese Beschickungsöffnung 28 ist von einer Fläche 35 umgeben. Die Beschickungsöffnung 28 und die Fläche 35 sind bogenabschnittartig geformt.

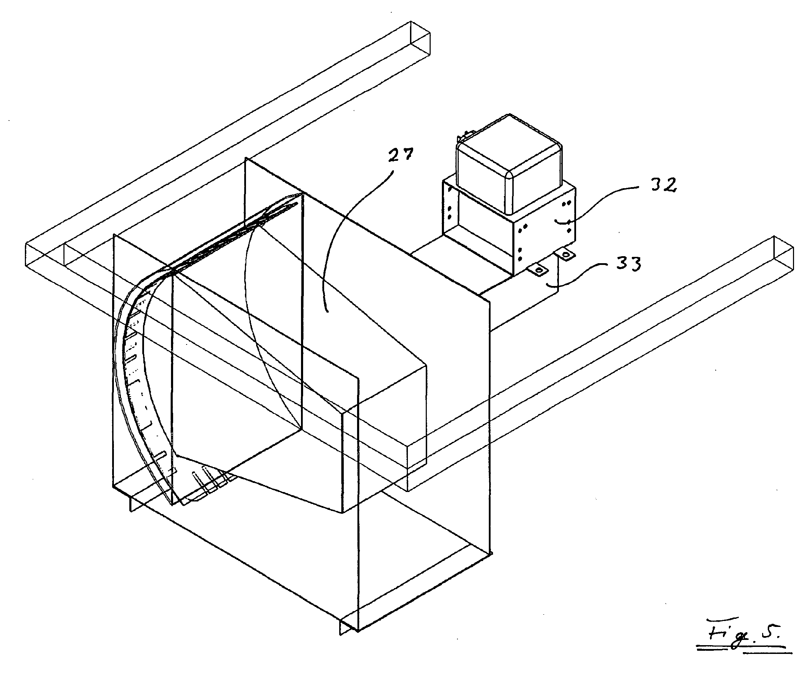

Durch ein Verschwenken des Erwärmungsraumes 27, wie dies in der Figur 5 dargestellt ist, kommt die Beschickungsöffnung 28 vor eine Platte 29 zu liegen, die in einer bogenabschnittartigen Halterung 30 montiert ist und die eine Vielzahl von Federlaschen 31 an ihrem Umfang aufweist. Diese Federlaschen kommen dabei in direkte Anlage an die Fläche 35, so dass sie dann das Austreten von Mikrowellen verhindern, die durch ein Magnetron 32 erzeugt und durch einen Mikrowellenleitkanal 33 in das Innere des Erwärmungsraumes 27 geleitet werden.

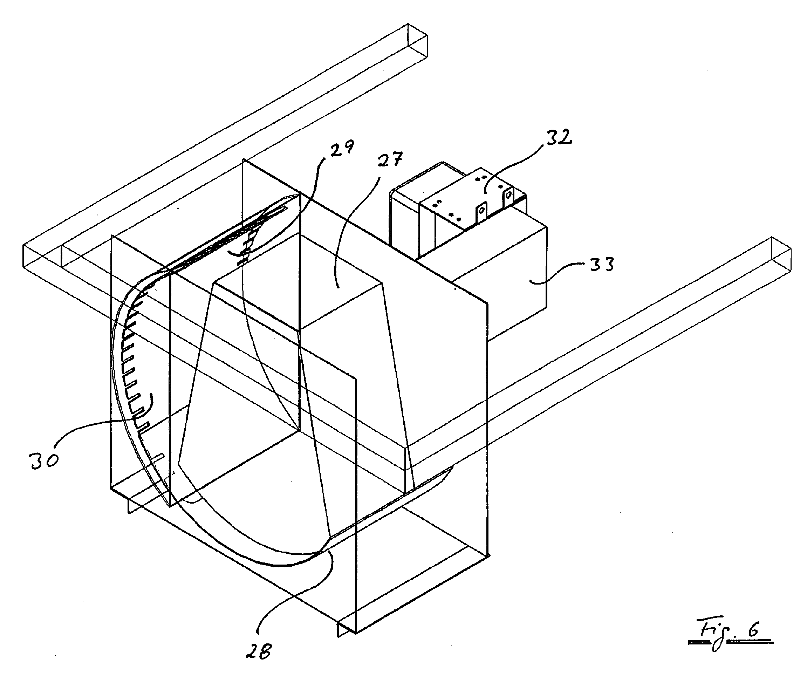

Nachdem die Mikrowellen das zu erwärmende Gut, das bei einer Position des Erwärmungsraumes 27 gemäß Figur 4 in diesen eingebracht wurde, erwärmt hat, wird der Erwärmungsraum 27 dann in die in Figur 6 dargestellte Position verschwenkt. Dabei fällt das in dem Erwärmungsraum 27 befindliche Gut nach unten durch die Beschickungsöffnung 28 heraus und kann dann beispielsweise aus einer Entnahmeöffnung eines Verkaufsautomaten von einem Benutzer entnommen werden.

Bei den hier beschriebenen Ausführungsformen sind jeweils sehr dauerhaft haltbare Abdichtungen gegen Mikrowellen gezeigt, die durch die Vielzahl von Federlaschen erreicht wird, die an einem Flächenabschnitt angreifen, der die Beschickungsöffnungen der dargestellten Mikrowellenöfen umgibt.

## Patentansprüche

1. Mikrowellenofen mit einem Erwärmungsraum (1 , 11 , 24 , 27) mit einer Beschickungsöffnung (2, 12, 23, 28) und einem Verschlusselement mit einem die Beschickungsöffnung (2 , 12 , 23 , 28) an ihrem Umfang überragenden, an seinem Umfang mit einer Vielzahl von Laschen versehenen Laschenelement,
**dadurch gekennzeichnet, dass** das Laschenelement als metallisches Plattenelement (4 , 14 , 20 , 29) ausgeführt ist, wobei die Laschen als Federlaschen (5, 16, 21, 31) ausgebildet sind, die in Richtung einer die Beschickungsöffnung (2, 12, 23, 28) umgebenden Fläche (6, 17, 25, 35) aus einer durch das Plattenelement (4, 14, 20, 29) bestimmten Ebene herausgebogen sind.

2. Mikrowellenofen gemäß Anspruch 1, **dadurch gekennzeichnet, dass** die Federlaschen (5 , 16 , 21 , 31) einstückig mit dem Plattenelement (4, 14 , 20 , 29) hergestellt sind.

3. Mikrowellenofen gemäß Anspruch 1, **dadurch gekennzeichnet, dass** die Federlaschen (5 , 16 , 21 , 31) durch Schlitze (34) voneinander getrennt sind.

4. Mikrowellenofen gemäß Anspruch 1, **dadurch gekennzeichnet, dass** die Federlaschen (5 , 16 , 21 , 31) in Richtung der Beschickungsöffnung (2 , 12 , 23 , 28) aus der durch das Plattenelement (4 , 14 , 20 , 29) bestimmten Ebene vorstehen.

5. Mikrowellenofen gemäß Anspruch 1, **dadurch gekennzeichnet, dass** das Plattenelement (4 , 14 , 20 , 29) mittels einer elastischen Lagerung (15) an einem Türelement (3 , 13 , 22) befestigt ist.

6. Mikrowellenofen gemäß Anspruch 1, **dadurch gekennzeichnet, dass** das Plattenelement (20 , 29) in einer bogenabschnittartigen Halterung (22, 30) montiert ist und dass die Beschickungsöffnung (23 , 28) des Erwärmungsraumes (24 , 27) und die Halterung (22 , 30) gegeneinander verschwenkbar sind.

7. Mikrowellenofen gemäß Anspruch 1, **dadurch gekennzeichnet, dass** in dem Plattenelement (20) eine Durchtrittsöffnung (26) für Mikrowellen vorgesehen ist.

## Claims

1. A microwave oven, comprising a heating compartment (1, 11, 24, 27) with a charge opening (2, 12, 23, 28) and a closure element with a strap element which protrudes beyond the circumference of the charge opening (2, 12, 23, 28) and is provided with a plurality of straps on its circumference, **characterized in that** the strap element is arranged as a metallic plate element (4, 14, 20, 29), wherein the straps are arranged as spring straps (5, 16, 21, 31) which are bent out of a plane determined by the plate element (4, 14, 20, 29) in the direction of a surface (6, 17, 25, 35) surrounding the charge opening (2, 12, 23, 28).

2. A microwave oven according to claim 1, **characterized in that** the spring straps (5, 16, 21, 31) are integrally made with the plate element (4, 14, 20, 29).

3. A microwave oven according to claim 1, **characterized in that** the spring straps (5, 16, 21, 31) are separated by slits (34) from each other.

4. A microwave oven according to claim 1, **characterized in that** the spring straps (5, 16, 21, 31) protrude from the plane determined by the plate element (4, 14, 20, 29) in the direction of the charge opening (2, 12, 23, 28).

5. A microwave oven according to claim 1, **characterized in that** the plate element (4, 14, 20, 29) is fixed by means of an elastic bearing (15) to a door element (3, 13, 22).

6. A microwave oven according to claim 1, **characterized in that** the plate element (20, 29) is mounted in a mount (22, 30) shaped in the manner of an arc section, and that the charge opening (23, 28) of the heating compartment (24, 27) and the mount (22, 30) are pivotable against each other.

7. A microwave oven according to claim 1, **characterized in that** a passage opening (26) for microwaves is provided in the plate element (20).

## Revendications

1. Four à micro-ondes avec un compartiment de réchauffage (1, 11, 24, 27) avec une ouverture de remplissage (2, 12, 23, 28) et avec un élément de fermeture avec un élément à languettes dépassant la circonférence de l'ouverture de remplissage (2, 12, 23, 28) et muni d'une pluralité de languettes sur sa circonférence, **caractérisé en ce que** l'élément à languettes est conçu comme un élément en forme de plaque (4, 14, 20, 29) métallique, dans lequel les languettes sont conçues comme des languettes de ressort (5, 16, 21, 31) qui sont recourbées en direction d'une surface (6, 17, 25, 35) entourant l'ouverture de remplissage (2, 12, 23, 28) à partir d'un plan défini par l'élément en forme de plaque (4, 14, 20, 29).

2. Four à micro-ondes selon la revendication 1, **caractérisé en ce que** les languettes de ressort (5, 16, 21, 31) sont fabriquées d'un seul tenant avec l'élément en forme de plaque (4, 14, 20, 29).

3. Four à micro-ondes selon la revendication 1, **caractérisé en ce que** les languettes de ressort (5, 16, 21, 31) sont séparées les unes des autres par des fentes (34).

4. Four à micro-ondes selon la revendication 1, **caractérisé en ce que** les languettes de ressort (5, 16, 21, 31) dépassent du plan défini par l'élément en forme de plaque (4, 14, 20, 29) en direction de l'ouverture de remplissage (2, 12, 23, 28).

5. Four à micro-ondes selon la revendication 1, **caractérisé en ce que** l'élément en forme de plaque (4, 14, 20, 29) est fixé au moyen d'un appui élastique (15) sur un élément de porte (3, 13, 22).

6. Four à micro-ondes selon la revendication 1, **caractérisé en ce que** l'élément en forme de plaque (20, 29) est monté dans une fixation (22, 30) en forme de segment d'arc et **en ce que** l'ouverture de remplissage (23, 28) de l'espace de réchauffage (24, 27) et la fixation (22, 30) peuvent pivoter l'une par rapport à l'autre.

7. Four à micro-ondes selon la revendication 1, **caractérisé en ce qu'**une ouverture de passage (26) pour les micro-ondes est prévue dans l'élément en forme de plaque (20).
